# EUROPEAN PATENT APPLICATION

(11) **EP 1 591 013 A1**
(43) Date of publication of application: **02.11.2005**
(21) Application number: 04076287.4
(22) Date of filing: 26.04.2004
(51) Int. Cl.: A21C 15/02

(54) **Sandwich stacking device as well as sandwich production line comprising such device**

(71) Applicant: Bosgraaf Apparaten B.V., 8501 ZR Joure (NL)
(72) Inventor: Verbeek, Aijtze Jan, 8614 JJ Oudega (NL)
(74) Representative: Winckels, Johannes Hubertus F.

(57) **Abstract**

Sandwich stacking device for stacking in a sandwich production line (200) two halves (81, 82) of a transversely bisected sandwich (80). The device comprises a first and second grasping mechanism (2, 3), which comprise a first and second pick-up member (7, 17), respectively, having a top face defining a first and second engaging area (13, 23), respectively, for engaging a lower surface of the first and second sandwich half (81, 82), respectively. The device further comprises a carrier structure (4, 24, 25) for guiding and driving translation and rotation of at least the first pick-up member (7) relative to the second pick-up member (17), the translation being in a direction transverse to the engaging areas (13, 23) and the rotation being around a rotation axis (L) transverse to the engaging areas (13, 23) for moving at least one of the pick-up members between a pick-up position and an unload position.

## Description

The invention relates to a sandwich stacking device for stacking in a sandwich production line two halves of a transversely bisected sandwich. The invention furthermore relates to a sandwich production line comprising such device.

From practice it is known to stack sandwich halves in a sandwich production line manually or by means of a robot. Manual stacking, of course, is labour-intensive. Robotic stacking, however, also has drawbacks. Application of robots is expensive and requires much space. The space requirement is not only due to the space taken up by the robot itself, but is also related to the range of the robot arms. For example, safety regulations generally require the application of a safety screen around the robot outside the maximum range of the robot arm.

It is an object of the present invention to provide an automatic sandwich stacking device which is simple and requires little space.

According to the invention this object is achieved by providing a sandwich stacking device according to claim 1.

The sandwich stacking device according to the invention is based upon a compact mechanism comprising basic mechanically guided movement along predetermined pathes. Therefore the mechanism is simple and requires little space.

Specific embodiments of the invention are set forth in the dependent claims.

Further features, effects and details of the invention will now be described by way of example with reference to the figures in the accompanying schematical drawing, in which:
Fig. 1 schematically shows a perspective view of an example of an embodiment of a sandwich stacking device according to the invention.
Fig. 2 schematically shows a perspective view of a carrousel comprising two sandwich stacking devices of the type of Fig. 1.
Fig. 3A schematically shows a top view of a part of an example of an embodiment of a sandwich production line comprising a carrousel similar to that of Fig. 2.
Fig. 3B schematically shows a side view of the part of the production line of Fig. 3A.
Fig. 4A schematically shows a perspective view of an example of a transversely bisected sandwich to be handled by the stacking device of Fig. 1
Fig. 4B schematically shows a perspective view of a part of the stacking device of Fig. 1.
Fig. 5 schematically shows a side view of the production line of Fig. 3A.

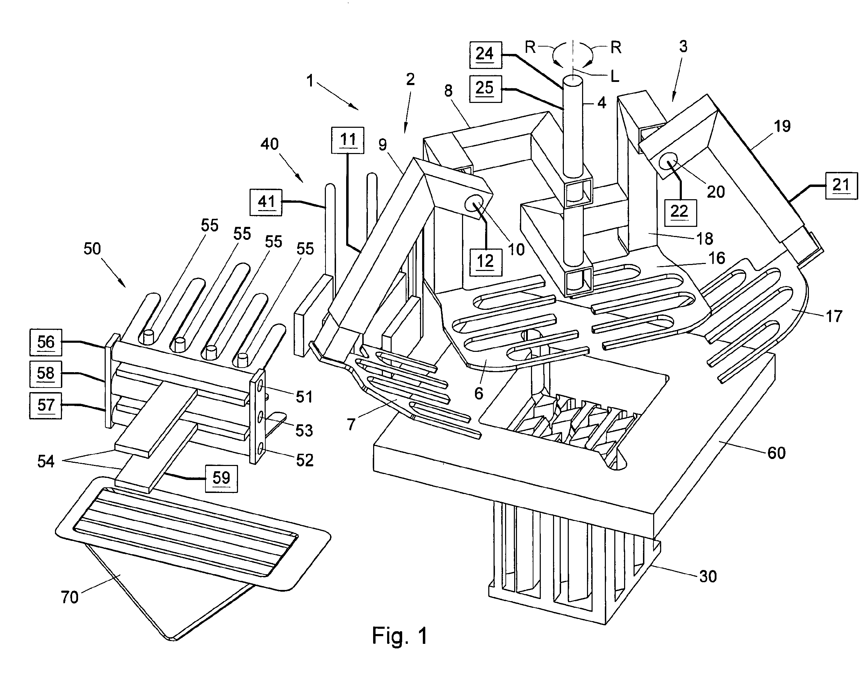

Reference is first made to Fig. 1. The sandwich stacking device 1 shown in Fig. 1 is comprised in a sandwich production line. The device 1 comprises a first sandwich grasping mechanism 2 and a second sandwich grasping mechanism 3. Fig. 1 further shows a sandwich pocket 60, a sandwich push-up unit 30, a stacked sandwich transport unit 40, a stacked sandwich loading mechanism 50 and a sandwich packing 70.

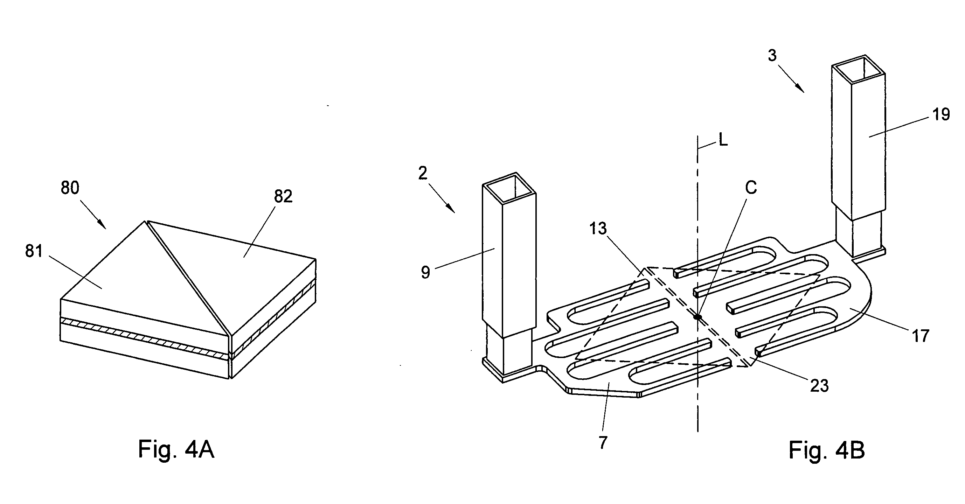

The sandwich pocket 60 is part of the sandwich production line, which via a conveyor belt can convey the pocket to and from the shown location in the stacking device 1. The pocket 60 is arranged to contain a sandwich which is transversely precut into two parts. An example of such sandwich 80 is shown in Fig. 4A. The shown sandwich 80 has a rectangular, in fact square, planform and the cut extends along a diagonal of the planform. Thus, the sandwich 80 consists of two triangular halves 81 and 82. However, other planform shapes and/or different cuts are also possible without deviating from the invention.

During an operation cyclus of the sandwich stacking device 1, the following steps are consecutively performed. The device 1 unloads the sandwich from the sandwich pocket 60, the device 1 stacks the sandwich halves, the transport unit 40 transports the thus obtained stacked sandwich to the sandwich loading mechanism 50 and the loading mechanism 50 loads the stacked sandwich in the sandwich packing 70.

The sandwich stacking device 1 further comprises a vertical shaft 4 to which the first grasping mechanism 2 and the second grasping mechanism 3 are each connected.

The first grasping mechanism 2 comprises a first upper hand 6 and a first lower hand 7. Each of both hands has a number of fingers lying in a more or less flat plane. The first grasping mechanism 2 further comprises a first upper hand arm structure 8 and a first lower hand arm structure 9. The upper hand 6 is fixedly connected to the lower end of the arm structure 8 which with another end is connected to the shaft 4. The arm structure 9 has a Γ-shape of which the vertical section is telescopic. This telescopic motion is driven by suitable driving means 11, which for example can be based upon cilinder action. The lower hand 7 is fixedly connected to the free end of the telescopic section. The horizontal section of the Γ-shape is hingedly connected to the arm structure 8 via a horizontally oriented first rotary shaft 10. The hinging motion is driven by suitable driving means 12, which for example can be based upon cilinder-crank interaction.

The second grasping mechanism 3 comprises a second upper hand 16 and a second lower hand 17. Each of both hands has a number of fingers lying in a more or less flat plane. The second grasping mechanism 3 further comprises a second upper hand arm structure 18 and a second lower hand arm structure 19. The upper hand 16 is fixedly connected to the lower end of the arm structure 18 which with another end is connected to the shaft 4. The arm structure 19 has a Γ-shape of which the vertical section is telescopic. This telescopic motion is driven by suitable driving means 21, which for example can be based upon cilinder action. The lower hand 17 is fixedly connected to the free end of this vertical telescopic section. The horizontal section of the Γ-shape is hingedly connected to the arm structure 18 via a horizontally oriented second rotary shaft 20. The hinging motion is driven by suitable driving means 22, which for example can be based upon cilinder-crank interaction.

During an operation cyclus of the sandwich stacking device 1, the device 1 functions as follows. Herein, it is assumed that in the beginning of such cyclus the device 1, the pocket 60, the transport unit 40, the sandwich loading mechanism 50 and the loading mechanism 50 are in the positions shown in Fig. 1, while a precut sandwich 80 (see Fig. 4A) is present in the pocket 60 then. At first, the sandwich in the pocket 60 is pushed up by the push-up unit 30 until a level above the sandwich pocket 60. In a next step, the first and second lower hand arm structures 9 and 19 are being partly rotated around their respective rotary shafts 10 and 20. These rotations are in such direction and to such extent that after these rotations the first and second lower hands 7 and 17 are lying under the sandwich and substantially parallel to the sandwich. In Fig. 4B such positions of the first and second lower hands 7 and 17 are shown. These rotations might be performed (partly) simultaneously or one rotation after the other. In order that the push-up unit 30 does not block the movement of the lower hands 7 and 17, the push-up unit 30 comprises suitable passageways through which the fingers of the lower hands 7 and 17 may pass.

As shown in Fig. 4B, the first lower hand 7 has a top face defining a first engaging area 13 for engaging a lower surface of the first sandwich half 81. Similarly, the second lower hand 17 has a top face defining a second engaging area 23 for engaging a lower surface of the second sandwich half 82. The position shown in Fig. 4B is a pick-up position in which the first and second engaging areas 13 and 23 are adjacent to one another in a common plane.

In order to clamp the first sandwich half 81 between the first upper hand 6 and the first lower hand 7, the telescopic section of the first lower hand arm structure 9 is slided-in to a suitable extent. Similarly, the second sandwich half 82 is clamped by sliding-in the telescopic section of the second lower hand arm structure 19.

When both sandwich halves have been thus clamped, the push-up unit 30 may be retracted in downward direction from the sandwich pocket 60, after which the sandwich pocket may be conveyed away from the stacking device 1 by the conveyor belt of the production line, while a new sandwich pocket may by conveyed to the device 1.

As for the grasping mechanisms, after clamping the sandwich halves the second grasping mechanism 3 is translated vertically upward with respect to the first grasping mechanism 2. That is, the translation is in a direction transverse to the engaging areas 13 and 23. In order to enable such translation the shaft 4 might for instance be axially fixedly connected to the second mechanism 3 and axially movably connected to the first mechanism 2. Fig. 1 schematically shows driving means 24 for the translative movement. The extent of the vertical relative translation of the two mechanisms 2 and 3 is such that after translation the bottom surface of the second lower hand 17 of the second mechanism 3 is at a higher level than the upper surface of the first upper hand 6 of the first mechanism 2.

Next, the two grasping mechanisms 2 and 3 are rotated with respect to each other over an angle of substantially 180 degrees around the central axis L of the shaft 4, which central axis is transverse to the engaging areas 13 and 23. This relative rotation of the mechanisms 2 and 3 is designated by the arrows R in Fig. 1. Fig. 1 schematically shows driving means 25 for the rotative movement. In the shown example the central axis L of the shaft 4 is positioned such that in the operation condition shown in Fig. 4B, in which operation condition the first engaging area 13 and the second engaging area 23 are substantially adjacent in one and the same plane and are thus constituting a joint engaging area, said rotation axis L passes through the centre C of said joint engaging area.

The geometries of the mechanisms 2 and 3 are cooperating with each other such that said rotation is possible without the mechanisms 2 and 3 hitting each other. After such rotation the two triangular sandwich halves 81 and 82 are lying above one another in a substantially aligned way, which is a favourable position for further handling of the sandwich halves. This position is an unload position for the sandwich halves.

It is remarked that, if the above mentioned relative rotation was performed around another rotation axis, that is to say a rotation axis not passing through said centre C, said aligned unload position would be arrived at after a further translation of one of the lower hands relative to the other of the lower hands. And if said other rotation axis was taken such that it extends inbetween the first engaging area 13 and the second engaging area 23, said further translation would be a simple translation in the direction of the sandwich cut.

Next, the thus conditioned assembly of the two grasping mechanisms 2 and 3 including the grasped sandwich halves, together with the shaft 4 that interconnects the mechanisms, is displaced by means of a suitable displacement structure (not shown in Fig. 1) to a position above the stacked sandwich transport unit 40. In the shown example the sandwich remains in horizontal position during displacement, and during rotation is rotated around a vertical axis over an angle of substantially 135 degrees clockwise. In this way, the sandwich halves 81 and 82, when they are in their position above the sandwich transport unit 40, are facing with their diagonal cut sides in the direction of the stacked sandwich loading mechanism 50. However, it is remarked that the shown example is merely for illustrating the basic principles of the device and that many different displacement patterns and many different arrangements of the transport unit 40 and the loading mechanism 50 are possible.

The shown transport unit 40 is more or less a rake with vertically upward extending teeth. The unit 40 is driven by suitable driving means 41. When the two grasping mechanisms 2 and 3 including the grasped sandwich halves 81 and 82 are above the transport unit 40, the unit 40 is moved vertically upwards such that the rake teeth pass between the fingers of the hands 6, 7, 16 and 17, wherein the rake teeth are coming between the sandwich halves and the bridging sections of the hand fingers. Then, the rake 40 is moved away from the grasping mechanisms 2 and 3 in the direction of the loading mechanism 50, taking along with it the stacked sandwich halves 81 and 82.

The stacked sandwich loading mechanism 50 has a row of parallel upper fingers and a row of parallel lower fingers. The upper row and lower row, respectively, can be driven to hinge with the fingertips towards and away from each other through hinge axes 51 and 52, respectively, driven by suitable driving means 56 and 57, respectively. The rake 40 stops its movement when the stacked sandwich has arrived between the two rows of fingers of the loading mechanism 50. Then the stacked sandwich is grasped by the finger rows of the mechanism 50 and the rake 40 can return to its original position. By rotating the loading mechanism 50 in downward direction over 90 degrees around the axis 53, and translating it in downward direction, the stacked sandwich is loaded in the packing 70 which in a later stage can be sealed. The rotating and translating of the loading mechanism can be performed by suitable driving means 58. Then, the grasping action of the finger rows can be released and the mechanism 50 can be moved upward. During this upward movement, in order to prevent that the upward moving mechanism 50 takes parts of the sandwich along with it, a part of the mechanism 50 can temporarily remain pressed against the stacked sandwich by some retaining means. In the device shown, these retaining means consist of a bar structure 54 and 55, of which the bars 55 are in pressing contact with the stacked sandwich. The retaining means can be driven by suitable driving means 59.

As compared to known robots for transporting sandwiches and loading them into packings, the described transport unit 40 and loading mechanism 50 are simple and require little space, because they are compact and comprise basic mechanically guided movement along predetermined pathes.

After loading the sandwich in the packing 70, the packing 70 can be sealed, whereas the components of the stacking device can return to their original positions shown in Fig. 1.

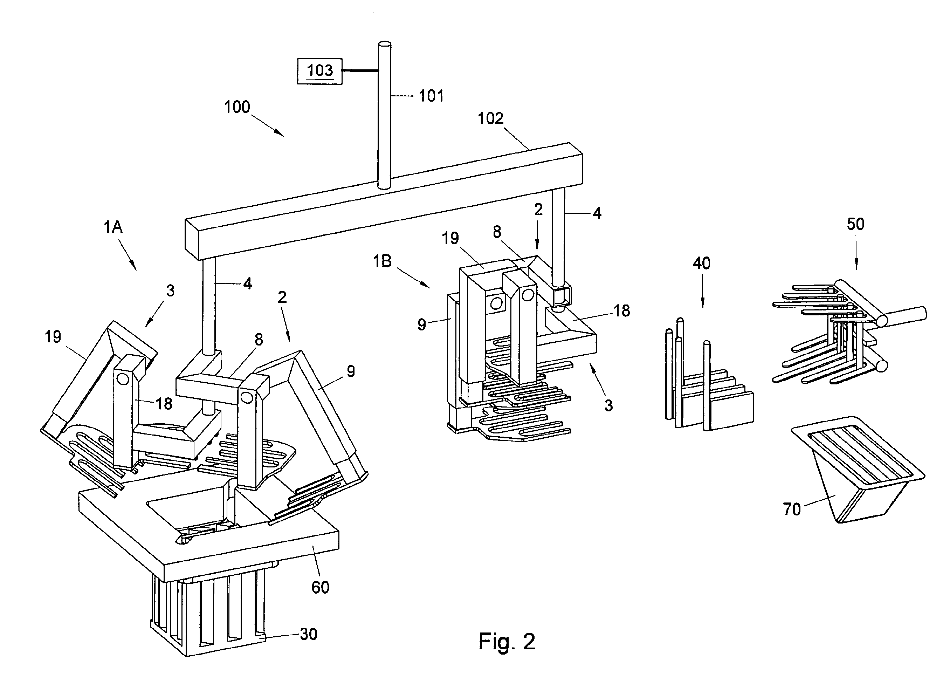

Reference is now made to Fig. 2. which schematically shows a perspective view of a carrousel 100 comprising two sandwich stacking devices 1A and 1B of the type shown in Fig. 1. In Fig. 2 components corresponding to components of Fig. 1 have been identified by identical reference numerals. The carrousel comprises a vertically oriented rotatable shaft 101 and a horizontal bar 102 which at its half length position is fixedly connected to the lower end of the shaft 101. The shaft 4 of the sandwich stacking device 1A is connected with its upper part to one end of the horizontal bar 102, and the shaft 4 of device 1B is likewise connected to the other end of the bar 102. The rotatable shaft 101 is driven by suitable driving means 103.

The stacking device 1A in the shown condition is in the beginning of its operation cyclus, that is the sandwich halves have not yet been grasped by the device 1A. The device 1B in the shown condition is in a further stage of its operation cyclus, that is in a stage in which the two grasping mechanisms 2 and 3 have already been translated and rotated with respect to each other in a manner as described above with reference to Fig. 1. Therefore, in the shown positions of the stacking devices, a first pair of sandwich halves can be loaded from the sandwich pocket 60 into the device 1A for grasping and stacking, while simultaneously a second pair of sandwich halves can be unloaded from the device 1B for loading into the packing 70 by the aid of the transport unit 40 and loading mechanism 50. After such loading and unloading operations the carrousel 100 can be rotated around its shaft 101 over an angle of 180 degrees. After such rotation and after other steps in the individual operation cycli of the devices 1A and 1B, the device 1B can be made ready for loading a sandwich while a sandwich can be unloaded from the device 1A. The fact that the carrousel 100 enables simultaneous loading and unloading operations of the two different stacking devices 1A and 1B, is advantageous in the sense that it improves the speed of the sandwich production line.

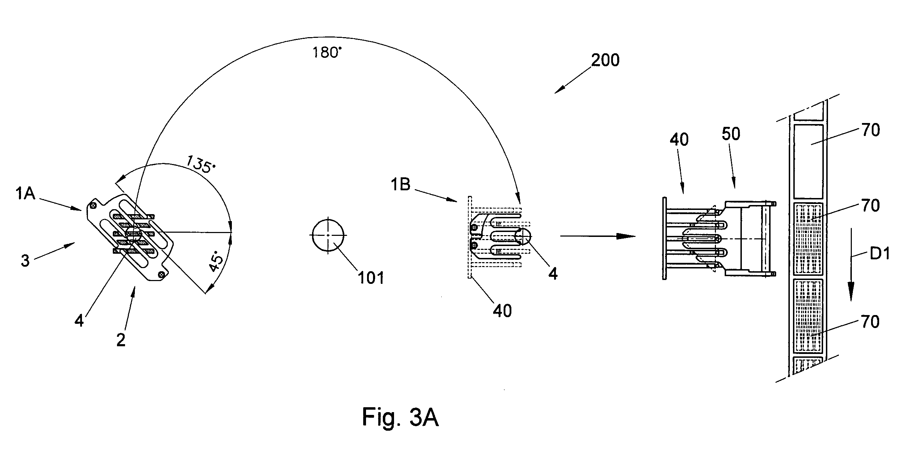

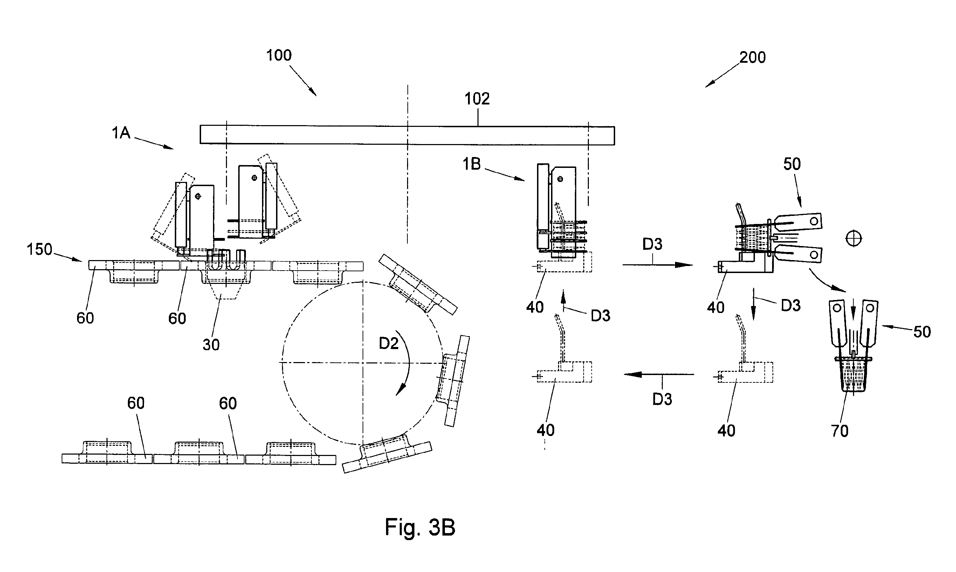

Reference is now made to Figs. 3A and 3B which show a part of a sandwich production line 200 comprising a carrousel similar to that of Fig. 2. In Figs. 3A and 3B components similar to that of Figs. 1 and 2 have been identified by identical reference numerals.

As explained, the two grasping mechanisms 2 and 3 of the sandwich stacking device 1A of Figs. 3A and 3B are rotatable with respect to each other over an angle of substantially 180 degrees around the centre line L of shaft 4. In the example of Fig. 3A it is shown that this relative rotation of the mechanisms 2 and 3 can be accomplished in that the mechanism 2 is rotatable back and forth over an angle of 45 degrees around the centre line L of shaft 4, while the mechanism 3 is rotatable back and forth over an angle of 135 degrees around the centre line of shaft 4. Fig. 3A further shows a string of sandwich packings 70. In operation this string of packings performs a stepwise movement along the sandwich loading mechanism 50 in the shown direction D1.

Fig. 3B shows a conveyor belt (150) for the sandwich pockets 60. In operation this conveyor belt performs a stepwise movement along the carrousel 100 in the shown direction D2. Fig. 3B further shows the movement pattern of the transport unit 40 in the directions indicated by the arrows D3.

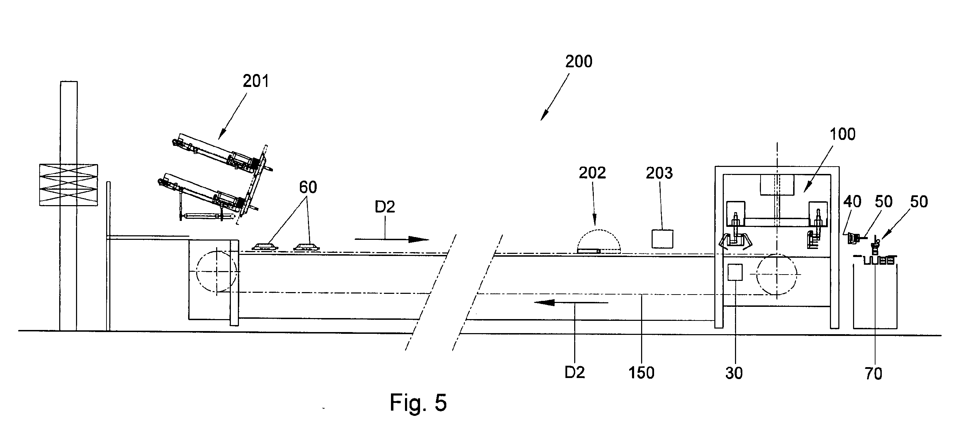

Reference is now made to Fig. 5, which shows a side view of the sandwich production line 200 which is partly shown in Figs. 3A and 3B. The production line 200 comprises at one end a bread dispenser 201 for dispensing bread slices into the pockets 60. The pockets 60, being filled with bread slices, are being carried by the conveyor belt 150 in the shown direction D2 towards the opposite end of the production line. While being transported along the conveyor belt, the bread slices can undergo several treatments and can receive sandwich filling. In order to obtain filled sandwiches, the production line further comprises a turning device 202 for turning a substantially unfilled bread slice on top of a filled bread slice. In order to obtain transversely bisected sandwiches, the production line further comprises a sandwich cutting device 203 for cutting the sandwich in the pocket 60. For example an ultrasonic knife entering the pocket 60 from above can be used for this purpose. After being cut, the transversely bisected sandwiches can undergo the above explained treatments in those parts of the production line 200 shown in Figs. 3A and 3B.

An advantage of the application of sandwich pockets, such as the pockets 60, is that the pockets aid in positioning of the bread slices and the sandwich ingredients. Furthermore, the pockets prevent loss of ingredients and enable accurate cutting of sandwiches in the pockets, for example by means of the abovementioned ultrasonic knife.

## Claims

1. A sandwich stacking device for stacking in a sandwich production line (200) two halves (81, 82) of a transversely bisected sandwich (80), comprising:
- a first grasping mechanism (2) provided with first driving means (11, 12) for grasping a first half (81) of the sandwich (80), the first mechanism (2) comprising a first pick-up member (7) having a top face defining a first engaging area (13) for engaging a lower surface of the first sandwich half (81);
- a second grasping mechanism (3) provided with second driving means (21, 22) for grasping a second half (82) of the sandwich (80), the second mechanism (3) comprising a second pick-up member (17) having a top face defining a second engaging area (23) for engaging a lower surface of the second sandwich half (82); and
- a carrier structure (4, 24, 25) for carrying the grasping mechanisms (2, 3), comprising guiding and driving means (4, 24, 25) for guiding and driving translation and rotation of at least the first pick-up member (7) relative to the second pick-up member (17), the translation being in a direction transverse to the engaging areas (13, 23) and the rotation being around a rotation axis (L) transverse to the engaging areas (13, 23) for moving at least one of the pick-up members between a pick-up position in which its engaging area is adjacent to the engaging area of the other pick-up member in a common plane and an unload position in which its engaging area is in a plane spaced from the engaging area of the other pick-up member.

2. A sandwich stacking device according to claim 1, wherein, in said pick-up position, said rotation axis (L) extends inbetween the first engaging area (13) and the second engaging area (23).

3. A sandwich stacking device according to claim 2, wherein, in said pick-up position, said rotation axis (L) passes through the center (C) of the joint engaging area (13, 23) which comprises both the first engaging area (13) and the second engaging area (23).

4. A sandwich stacking device according to any of the preceding claims, wherein the carrier structure (4, 24, 25) is adapted for turning-around the at least one of the pick-up members relative to the other one of the pick-up members from the pick-up position over 180 degrees about said rotation axis (L).

5. A sandwich stacking device according to any of the preceding claims, wherein the carrier structure comprises a shaft (4) which is connected to the first grasping mechanism (2) and to the second grasping mechanism (3), and wherein the first grasping mechanism (2) and the second grasping mechanism (3) are rotatable relative to each other around the shaft (4).

6. A sandwich stacking device according to claim 5, wherein the first grasping mechanism (2) and the second grasping mechanism (3) are slidable relative to each other along the shaft (4).

7. A sandwich production line comprising a sandwich stacking device (1; 1A; 1B) according to any of the preceding claims.

8. A sandwich production line according to claim 5, further comprising sandwich pockets (60) for containing sandwiches and a conveyor belt (150) for conveying the sandwich pockets (60) to the sandwich stacking device (1; 1A; 1B).

9. A sandwich production line according to claim 7 or 8, further comprising a sandwich push-up unit 30 for lifting the sandwich towards the sandwich stacking device (1; 1A; 1B).

10. A sandwich production line according to any of the claims 7-9, further comprising a sandwich transport unit (40) for unloading the sandwich from the stacking device (1; 1A; 1B) and for transporting the sandwich.

11. A sandwich production line according to any of the claims 7-10, further comprising a stacked sandwich loading mechanism (50) for loading the sandwich, when stacked, into a sandwich packing (70).

12. A sandwich production line according to any of the claims 7-11, further comprising a carrousel (100) comprising at least two stacking devices (1; 1A; 1B) according to any of the claims 1-6.
